**Europäisches Patentamt**

**European Patent Office**

**Office européen des brevets**

(19)

(11) Veröffentlichungsnummer : **0 464 458 B1**

(12)

# EUROPÄISCHE PATENTSCHRIFT

(45) Veröffentlichungstag der Patentschrift :
**11.08.93 Patentblatt 93/32**

(51) Int. Cl.$^5$ : **B01J 41/14, C08F 8/32**

(21) Anmeldenummer : **91109999.2**

(22) Anmeldetag : **19.06.91**

(54) **Verfahren zur Herstellung von Anionenaustausch-Harzen vom Poly(meth)acrylamid-Typ.**

(30) Priorität : **30.06.90 DE 4020943**

(43) Veröffentlichungstag der Anmeldung :
**08.01.92 Patentblatt 92/02**

(45) Bekanntmachung des Hinweises auf die
Patenterteilung :
**11.08.93 Patentblatt 93/32**

(84) Benannte Vertragsstaaten :
**DE FR GB IT**

(56) Entgegenhaltungen :
**US-A- 2 675 359**

(73) Patentinhaber : **BAYER AG
W-5090 Leverkusen 1 Bayerwerk (DE)**

(72) Erfinder : **Heller, Harold, Dr.
Hufelandstrasse 59
W-5000 Köln 80 (DE)**
Erfinder : **Werner, Friedrich, Dr.
Auf der Hedwigshöhe 8
W-5064 Rösrath-Forsbach (DE)**
Erfinder : **Mitschker, Alfred, Dr.
Am Gartenfeld 50
W-5068 Odenthal-Holz (DE)**
Erfinder : **Ingendoh, Axel, Dr.
Engstenberger Höhe 10
W-5068 Odenthal-Osenau (DE)**

## Beschreibung

Anionenaustauscher vom Poly(meth)acrylamid-Typ stellen einen wichtigen, in der Praxis viel verwendeten Anionenaustauscher-Typ dar. Es besteht daher großes Interesse an wirtschaftlichen Herstellungsverfahren für diesen Anionenaustauschharz-Typ.

Ein bekanntes Verfahren zur Herstellung von Anionenaustauschern vom Poly(meth)acrylamid-Typ besteht in der Aminolyse von vernetzten Acrylsäureester-Perlpolymerisaten mit Polyaminen (s. z.B.: US-PS 2 675 359, DD-PS 99 587; CSSR-PS 169 356). Für die Aminolyse werden die Polyamine in großem Überschuß eingesetzt. Für die Wirtschaftlichkeit dieses Verfahrens ist eine möglichst quantitative Rückgewinnung des im Überschuß eingesetzten Polyamins von großer Bedeutung. Diese Rückgewinnung wurde bislang wie folgt vorgenommen: Nach beendeter Aminolyse wurden die Anionenaustauscher von der flüssigen, die Hauptmenge des überschüssigen Polyamins enthaltenden Phase abgetrennt; anschließend wurden die Anionenaustauscher mit Wasser gewaschen und aus den bei dieser Wäsche anfallenden Waschwässern wurde das in ihnen enthaltene Polyamin durch Zugabe von Ätznatron abgeschieden. Das durch die Ätznatron-Behandlung abgeschiedene Rohpolyamin wurde zusammen mit der Polyamin-haltigen flüssigen Phase fraktioniert destilliert.

Dieses Verfahren der Rückgewinnung hat jedoch den Nachteil, daß sich mit ihm die Polyamine in reiner Form entweder nur durch eine sehr aufwendige fraktionierte Destillation oder aber nur mit großen Verlusten zurückgewinnen lassen. Infolge der alkylierenden Wirkung der zu aminolysierenden vernetzten Polyacrylsäureester wird nämlich bei der Aminolyse stets eine gewisse Menge des Polyamins alkyliert. Diese alkylierten Polyamine unterscheiden sich aber in ihren Siedepunkten nur geringfügig von dem Siedepunkt des für die Aminolyse eingesetzten Polyamins (z.B. N,N-Dimethyl-1,3-diaminopropan Kp: 134,8°C/ 1013 mbar; N,N,N'-Trimethyl-1,3-diaminopropan Kp: 138°C/ 1013 mbar; N,N,N',N'-Tetramethyl-1,3-diaminopropan Kp: 145°C/1013 mbar). Die Abtrennung der alkylierten Polyamine macht daher große Schwierigkeiten. Andererseits ist die Abtrennung der alkylierten Polyamine jedoch wünschenswert, weil durch ihre Gegenwart der Amidierungsgrad, d.h. die Ausbeute, in der die Carbonestergruppen in Carbonamidgruppen umgewandelt werden, herabgesetzt wird.

Überraschenderweise wurde jetzt gefunden, daß man das bekannte Verfahren zur Herstellung von Anionenaustausch-Harzen vom Poly(meth)acrylamid-Typ durch Aminolyse von Perlpolymerisaten aus vernetzten Poly(meth)acrylsäureestern mit Polyaminen wesentlich vereinfachen und damit seine Wirtschaftlichkeit wesentlich verbessern kann, wenn man die nach dem Abtrennen der Anionenaustauscher vom Aminolyse-Gemisch zurückbleibende, Polyamin-haltige flüssige Phase nicht zusammen mit dem mittels Ätznatron aus den Waschwässern abgeschiedenen rohen Polyamin destilliert und das bei der Destillation erhaltene Polyamin für die nächste Aminolyse wieder verwendet, sondern wenn man die zurückbleibende flüssige Phase und die Polyamin-haltigen Waschwässer unmittelbar mit dem zu aminolysierenden Perlpolymerisat aus vernetztem Poly(meth)acrylsäureester vermischt, dem Gemisch die für die Einstellung des gewünschten Polyamin-Überschusses erforderliche Menge an frischem Polyamin zusetzt und das erhaltene Gemisch solange destillativ entwässert, bis der Wassergehalt des Gemisches auf einen Wert < 7 Gew.-%, vorzugsweise von etwa 6 bis 3 Gew.-%, gesunken ist. An die destillative Entwässerung schließt sich unmittelbar die Aminolyse des Poly(meth)acrylsäureester-Perlpolymerisates an.

Die erfindungsgemäße Maßnahme, die nach dem Abtrennen der Anionenaustauscher zurückbleibende flüssige Phase zusammen mit den beim Waschen des Anionenaustauschers anfallenden Waschwässern für die nächste Aminolyse wieder zu verwenden und erst nach dem Vermischen von flüssiger Phase und Waschwässern mit dem zu aminolysierenden (Meth)Acrylsäureester-Perlpolymerisat und nach Zusatz von frischem Polyamin das Wasser abzudestillieren, bietet folgende Vorteile: Sie bringt eine Chemikalien-Ersparnis, es wird kein Ätznatron mehr zum Abscheiden des Polyamins benötigt; durch sie wird der Anfall der stark alkalischen Abwässer nach dem Abtrennen der Rohpolyamine vermieden; ferner bringt sie eine wesentliche Vereinfachung in der Aufarbeitung der Waschwässer - das durch den Ätznatronzusatz abgeschiedene rohe Polyamin muß nicht mehr abgetrennt werden - und vor allem bei der Destillation, weil nunmehr die fraktionierte Destillation des aus Polyamin und alkylierten Polyaminen bestehenden Gemisches entfällt. Statt dessen erfordert das erfindungsgemäße Verfahren lediglich ein Abdestillieren des Wassers aus dem aus abgetrennter flüssiger Phase, Waschwässern, Polyamin und Perlpolymerisat bestehenden Gemisch. Dieses Abdestillieren des Wassers erfordert aber nur einen geringen destillativen Aufwand.

Überraschenderweise wurde gefunden, daß bei der destillativen Entwässerung der flüssigen Phase, Waschwässer, Polyamin und Perlpolymerisat enthaltenden Gemische weder die zu erwartende Anreicherung der unerwünschten alkylierten Polyamine im Gemisch noch die zu erwartende (s. DD-PS 143 264) unerwünschte Hydrolyse der Polyacrylsäureester eintritt. Überraschenderweise wurde gefunden, daß die unerwünschten alkylierten Polyamine bei der destillativen Entwässerung im wesentlichen entfernt werden, so daß keine Anreicherung eintritt. Die Wiederverwendung der die überschüssigen Polyamine und deren Alkylierungsprodukte enthaltenden flüssigen Phase führt deshalb zu keiner Herabsetzung des Amidierungsgrades. Außerdem weisen die erhaltenen Anionenaustauscher keinen erhöhten, sondern nur den üblichen geringen Gehalt an schwachsauren Gruppen auf.

Die Erfindung betrifft daher ein Verfahren zur Herstellung von Anionenaustausch-Harzen vom Poly(meth)acrylamid-Typ durch Aminolyse von Perlpolymerisaten aus vernetzten Poly(meth)acrylsäureestern mit überschüssigem Polyamin, anschließendem Abtrennen der Anionenaustausch-Harze von der das nicht umgesetzte Polyamin enthaltenden flüssigen Phase, Aminfreiwaschen der Anionenaustauscher mit Wasser und Rückgewinnen der Polyamine aus den Waschwässern, das dadurch gekennzeichnet ist, daß man die, das nicht umgesetzte Polyamin enthaltende flüssige Phase und die Polyamin-haltigen Waschwässer unmittelbar mit dem zu aminolysierenden Perlpolymerisat aus vernetztem Poly(meth)acrylsäureester vermischt, das Gemisch mit der für die Einstellung des gewünschten Polyamin-Überschusses erforderlichen Menge an frischem Polyamin versetzt, das so erhaltene Gemisch solange destillativ entwässert, bis sein Wassergehalt auf einen Wert < 7 Gew.-%, vorzugsweise auf einen Wert von 6 - 3 Gew.-%, gesunken ist und das nach dieser destillativen Entwässerung zurückbleibende Gemisch in üblicher Weise aminolysiert.

Die erfindungsgemäße destillative Entwässerung wird vorzugsweise durch Abdestillieren des Wassers über eine Fraktionierkolonne vorgenommen. Bei dieser fraktionierten Destillation destilliert zunächst der bei der Aminolyse gebildete Alkohol ab und anschließend Gemische, bestehend aus Wasser, Alkohol und alkylierten Polyaminen.

Wenn die Temperatur des am Kopf der Kolonne übergehenden Destillates eine Temperatur von etwa 100 -110°C erreicht hat, ist der Wassergehalt des Sumpfes (Gemisches) auf den angestrebten Wassergehalt < 7 Gew.-% gesunken.

Das nach der destillativen Entwässerung vorliegende Gemisch aus Perlpolymerisat und Polyamin wird anschließend in üblicher Weise aminolysiert, d.h. - gegebenenfalls im Autoklaven - unter Rühren auf Temperaturen von 130-200°C erhitzt, etwa 5- 30 Stunden auf dieser Temperatur gehalten und anschließend abgekühlt.

Nach dem Abkühlen wird der Anionenaustauscher mechanisch abgetrennt, z.B. abgesaugt, und das Filtrat, die Polyamin-haltige flüssige Phase, aufgefangen. Der Anionenaustauscher wird anschließend mit Wasser bzw. wässrigen Lösungen aminfrei gewaschen.

Das Aminfreiwaschen wird vorzugsweise durch mehrfaches Suspendieren des Anionenaustauschers in Wasser, vorzugsweise im Gegenstrom unter Wiederverwendung der im vorhergehenden Ansatz angefallenen, Polyamin-ärmeren Waschwasserfraktionen vorgenommen. Bei einer 4-stufigen Wäsche werden z.B. die nach der Wäsche in der 1. und 2. Stufe anfallenden, Polyamin-reicheren Waschwasserfraktionen mit der Polyamin-haltigen flüssigen Phase aus der Aminolyse vereinigt und mit dem zu aminolysierenden Perlpolymerisat vermischt. Die nach der Anionenaustauscherwäsche in der 3. und 4. Stufe anfallenden Polyamin-ärmeren Waschwasserfraktionen werden dagegen zum Auswaschen des beim folgenden Ansatz anfallenden Anionenaustauschers als Waschwasserfraktionen 1 und 2 wieder verwendet.

Zum Entfernen der letzten Polyaminspuren wird der Anionenaustauscher in eine Säule gefüllt und bis zur neutralen Reaktion des Waschwassers mit entsalztem Wasser ausgewaschen.

In dem erfindungsgemäßen Verfahren werden als Perlpolymerisate aus vernetzten Poly(meth)acrylaten die üblicherweise für die Herstellung von Anionenaustauschern vom Poly(meth)acrylamid-Typ verwendeten Mischpolymerisate aus niederen Acrylsäure- oder Methacrylsäurealkylestern mit mindestens einem Vernetzungsmittel, z.B. Divinylbenzol, verwendet. Solche für die Herstellung von Anionenaustauschern vom Poly(meth)acrylamid-Typ zu verwendenden (Meth)acrylsäureester sind z.B. in der EP-A 32 671 beschrieben. Die Polymerisate können gelförmig oder makroporös sein.

Die Aminolyse wird mit den üblicherweise für die Herstellung von Anionenaustauschern vom Poly(meth)acrylamid-Typ verwendeten Polyalkylenpolyaminen durchgeführt. Solche Polyalkylenpolyamine sind z.B. Propylendiamin, Diethylentriamin, Dipropylentriamin, Triethylentetramin, Tetraethylenpentamin, Aminoethyl-piperazin, N,N-Dimethylethylendiamin, N,N-Dimethylpropylendiamin-(1,3). N,N-Dimethylpropylendiamin-(1,3) wird bevorzugt verwendet.

Die nach dem erfindungsgemäßen Verfahren erhältlichen schwachbasischen Anionenaustauscher vom Typ vernetzter Poly(meth)acrylamide können anschließend durch partielle oder vollständige Alkylierung in die entsprechenden mittelbasischen bzw. starkbasischen Anionenaustauscher überführt werden.

Beispiel

293,3 g (~2,5 Mol Estergruppen) des makroporösen, vernetzten Acrylsäuremethylester-Perlpolymerisates, dessen Herstellung nachstehend beschrieben ist, (Wassergehalt des Perlpolymerisates: 14,75 Gew.-%) wurden in einer Mischung aus 1.147 g (11,2 Mol) N,N-Dimethyl-1,3-diaminopropan (99,9 %ig) und 250 g vollentsalztem Wasser suspendiert. Die Suspension wurde anschließend durch fraktionierte Destillation unter Verwendung einer Füllkörperkolonne (Kolonnenmaße: 800 x 24 mm; Zahl der theoretischen Böden: etwa 16) bis zu einem Restwassergehalt von 3.9 Gew.-% entwässert.

Die entwässerte Suspension wurde in einem Autoklaven 24 Stunden unter Rühren auf 180 bis 182°C erhitzt. Nach dem Abkühlen wurde das Anionenaustauschharz von der flüssigen Phase abgesaugt. Die flüssige Phase wurde für den nächsten Ansatz aufbewahrt.

Um den Anionenaustauscher aminfrei zu waschen, wurde dieser 4 mal nacheinander je 30 Minuten mit je 700 ml vollentsalztem Wasser verrührt und wieder abgesaugt. Die bei dieser 4-stufigen Wäsche anfallenden Waschwässer (W1, W2, W3, W4) wurden gesondert aufgefangen. (Wassergehalt dieser vier zurückgewonnenen Waschwässer: W1: 58 Gew.-%; W2: 83 Gew.-%; W3: 94 Gew.-%; W4: 98 Gew.-%). Die Waschwässer W1 und W2 wurden zusammen mit der abgetrennten flüssigen Phase in Ansatz 2 zur Aminolyse des Acrylsäuremethylester-Perlpolymerisates wieder verwendet.

Abschließend wurde der Anionenaustauscher in ein Filterrohr überführt und mit vollentsalztem Wasser ausgewaschen, bis der Ablauf aminfrei war. Der Wasserverbrauch betrug hierfür 2 Bettvolumina.

Es wurden 1.420 ml Anionenaustauscher erhalten.

Gehalt des Anionenaustauschers an schwachbasischen Gruppen: 1,62 Mol/l

Gehalt des Anionenaustauschers an schwachsauren Gruppen: 0,14 Mol/l

Das verwendete makroporöse vernetzte Acrylsäuremethylester-Perlpolymerisat war wie folgt erhalten worden:

In einer Mischung aus 2.162 g Acrylsäuremethylester, 193,5 g technischem Divinylbenzol (Gehalt an reinem Divinylbenzol: 62,8 Gew.-%; Rest Ethylstyrol) und 73 g 1,2,4-Trivinylcyclohexan wurden 291,5 g Isododecan und 19,4 g Dibenzoylperoxid (75 %ig) gelöst. Die Lösung wurde anschließend mit einer wässrigen Lösung von 4,5 g Methylcellulose und 0,15 g Natriumnitrit in 3.000 g vollentsalztem Wasser versetzt und dann zunächst 5 Stunden bei 65°C und anschließend weitere 2 Stunden bei 90°C perlpolymerisiert.

Ausbeute: 2.792 g feuchtes Perlpolymerisat

Wassergehalt: 14,75 Gew.-%

Korngröße: 0,125 - 1,6 mm

In den Ansätzen 2 bis 10 wurde wie folgt verfahren:

293,3 g des gleichen Perlpolymerisates, wie es für Ansatz 1 verwendet worden war, wurden mit der im vorhergehenden Ansatz angefallenen flüssigen Phase und den im vorherigen Ansatz angefallenen Waschwässern W1 und W2 suspendiert. Die Suspension wurde mit einer solchen Menge an frischem N,N-Dimethylamino-1,3-diaminopropan versetzt, daß der Gesamtgehalt der Suspension an N,N-Dimethyl-1,3-diaminopropan wieder 11,2 Mol betrug. (In der nachstehenden Tabelle 1 sind die in einzelnen Ansätzen angefallenen und in den folgenden Ansätzen wieder verwendeten Mengen an flüssiger Phase, Waschwässern W1 und W2, der Gesamtgehalt von flüssiger Phase und Waschwässern an Aminen (N,N-Dimethyl-1,3-diaminopropan = Amin 1; N,N,N'-Trimethyl-1,3-diaminopropan = Amin 2; N,N,N',N'-Tetramethyl-1,3-diaminopropan = Amin 3), die Menge an frisch zugesetztem Amin 1 und der Gehalt der Suspensionen an Aminen 1, 2 und 3 und an Wasser vor und nach der Entwässerung zusammengestellt).

Die so erhaltenen Suspensionen wurden durch fraktionierte Destillation unter Verwendung der in Ansatz 1 verwendeten Fraktionierkolonne bis auf einen Wassergehalt von etwa 5 Gew.-% entwässert.

Die entwässerten Suspensionen wurden unter den in Ansatz 1 beschriebenen Bedingungen aminolysiert. Auch die weiteren in Ansatz 1 beschriebenen Verfahrensschritte, Abtrennen des Anionenaustausch-Harzes, Waschen durch 4-maliges Suspendieren in Wasser und abschließendes Waschen in einem Filterrohr und die Weiterbehandlung der bei diesen Verfahrensschritten anfallenden flüssigen Phase und Waschwässer W1, W2, W3, W4 wurden wie für Ansatz 1 beschrieben vorgenommen mit dem einzigen Unterschied, daß für das 1. und 2. Waschen des abgetrennten Anionaustauschers kein vollentsalztes Frischwasser, sondern für die 1. Wäsche das beim vorhergehenden Ansatz angefallene Waschwasser 3 und für die 2. Wäsche das beim vorhergehenden Ansatz angefallene Waschwasser 4 verwendet wurden.

In der nachstehenden Tabelle 2 sind die in den einzelnen Ansätzen 2 bis 10 erhaltenen Ausbeuten an Anionenaustauscher und deren Gehalte an schwachbasischen und schwachsauren Gruppen angegeben.

Tabelle 1

| An-satz Nr. | aus An-satz Nr. | Gehalt der Suspensionen der einzelnen Ansätze vor der Entwässerung | | | | | | | | | | Gehalt der Suspensionen der einzelnen Ansätze nach der Entwässerung | | | |
|---|---|---|---|---|---|---|---|---|---|---|---|---|---|---|---|
| | | übernommene Mengen an | | | | | | Menge an zuge-setztem | Gesamt-menge | | nach | | | |
| | | flüssiger Phase [g] | Waschwasser W1 [g] | W2 [g] | Aminen Amin 1 [Mol] | Amin 2 [Mol] | Amin 3 [Mol] | Amin 1 [Mol] | Amin 1 [Mol] | $H_2O$ [Gew.-%] | Amin 1 [Mol] | Amin 2 [Mol] | Amin 3 [Mol] | $H_2O$ [Gew.-%] |
| 2 | 1 | 394 | 589 | 634 | 5,3 | 0,8 | 0,14 | 5,9 | 11,2 | 41 | 10,5 | 0,70 | ‹ 0,01 | 3,5 |
| 3 | 2 | 503 | 602 | 618 | 6,7 | 1,1 | 0,16 | 4,5 | 11,2 | 41 | 10,9 | 1,07 | 0,02 | 5,5 |
| 4 | 3 | 528 | 618 | 672 | 6,6 | 1,4 | 0,23 | 4,6 | 11,2 | 39 | 11,0 | 1,20 | 0,01 | 4,3 |
| 5 | 4 | 539 | 573 | 690 | 6,5 | 1,5 | 0,25 | 4,7 | 11,2 | 36 | 11,0 | 1,10 | 0,02 | 6,4 |
| 6 | 5 | 571 | 609 | 679 | 6,7 | 1,5 | 0,24 | 4,5 | 11,2 | 37 | 9,4 | 1,27 | 0,04 | 4,5 |
| 7 | 6 | 381 | 613 | 669 | 5,7 | 1,3 | 0,19 | 5,6 | 11,3 | 38 | 11,1 | 1,10 | 0,02 | 3,4 |
| 8 | 7 | 539 | 641 | 693 | 7,1 | 1,4 | 0,20 | 4,2 | 11,3 | 41 | 11,3 | 1,15 | 0,02 | 4,4 |
| 9 | 8 | 592 | 626 | 640 | 7,2 | 1,5 | 0,22 | 4,0 | 11,2 | 37 | 11,2 | 1,17 | 0,01 | 5,5 |
| 10 | 9 | 597 | 620 | 633 | 6,9 | 1,5 | 0,23 | 4,3 | 11,2 | 38 | 10,6 | 1,21 | 0,02 | 7,5 |

EP 0 464 458 B1

**Tabelle 2**

| Ansatz | Ausbeute ml | schwachbasische Gruppen Mol/l | schwachsaure Gruppen Mol/l |
|---|---|---|---|
| 2 | 1405 | 1,64 | 0,17 |
| 3 | 1445 | 1,62 | 0,14 |
| 4 | 1450 | 1,53 | 0,14 |
| 5 | 1480 | 1,54 | 0,18 |
| 6 | 1460 | 1,58 | 0,15 |
| 7 | 1460 | 1,60 | 0,16 |
| 8 | 1450 | 1,64 | 0,18 |
| 9 | 1490 | 1,57 | 0,19 |
| 10 | 1500 | 1,57 | 0,17 |
| 0 | 1460 ± 1,9 % | 1,59 ± 2,5 % | 0,16 ± 11 % |

**Patentansprüche**

1. Verfahren zur Herstellung von Anionenaustausch-Harzen vom Poly(meth)acrylamid-Typ durch Aminolyse von Perlpolymerisaten aus vernetzten Poly(meth)acrylsäureestern mit überschüssigem Polyamin, anschließendem Abtrennen der Anionenaustausch-Harze von der das nicht umgesetzte Polyamin enthaltenden flüssigen Phase, Aminfreiwaschen der Anionenaustauscher mit Wasser und Rückgewinnen der Polyamine aus den Waschwässern, dadurch gekennzeichnet, daß man die, das nicht umgesetzte Polyamin enthaltende flüssige Phase und die Polyamin-haltigen Waschwässer unmittelbar mit dem zu aminolysierenden Perlpolymerisat aus vernetztem Poly(meth)acrylsäureester vermischt, das Gemisch mit der für die Einstellung des gewünschten Polyamin-Überschusses erforderlichen Menge an frischem Polyamin versetzt, das so erhaltene Gemisch solange destillativ entwässert, bis sein Wassergehalt auf einen Wert < 7 Gew.-%, vorzugsweise auf einen Wert von 6 - 3 Gew.-%, gesunken ist und das nach dieser destillativen Entwässerung zurückbleibende Gemisch in üblicher Weise aminolysiert.

2. Verfahren nach Anspruch 1, dadurch gekennzeichnet, daß man die destillative Entwässerung durch Abdestillieren des Wassers über eine Fraktionierkolonne vornimmt.

3. Verfahren nach Anspruch 1 oder 2, dadurch gekennzeichnet, daß man das Aminfreiwaschen im Gegenstrom unter Wiederverwendung der im vorhergehenden Ansatz angefallenen, Polyamin-ärmeren Waschwasserfraktionen vornimmt und nur die Polyamin-reicheren Waschwasserfraktionen mit der Polyamin-haltigen flüssigen Phase aus der Aminolyse vereinigt und mit dem zu aminolysierenden Perlpolymerisat vermischt.

**Claims**

1. Process for the preparation of anion exchange resins of the poly(meth)acrylamide type by aminolysis of bead polymers of crosslinked poly(meth)acrylic acid esters with excess polyamine, subsequent separation of the anion exchange resins from the liquid phase containing the unreacted polyamine, washing of the anion exchanger with water to free it from amine and recovery of the polyamines from the wash waters, characterised in that the liquid phase containing the unreacted polyamine and the polyamine-containing wash waters are mixed directly with the crosslinked poly(meth)acrylic acid ester bead polymer to be aminolysed, the amount of fresh polyamine required for establishing the desired polyamine excess is added to the mixture, the mixture thus obtained is dehydrated by distillation until its water content has fallen to a value of < 7% by weight, preferably to a value of 6 - 3% by weight, and the mixture which remains after this dehydration by distillation is aminolysed in a customary manner.

2.  Process according to Claim 1, characterised in that the dehydration by distillation is carried out by distilling off the water over a fractionating column.

3.  Process according to Claim 1 or 2, characterised in that the washing to free the anion exchanger from amine is carried out in countercurrent, reusing the wash water fractions of lower polyamine content obtained in the preceding batch, and only the wash water fractions of higher polyamine content are combined with the polyamine-containing liquid phase from the aminolysis and mixed with the bead polymer to be aminolysed.

**Revendications**

1.  Procédé pour la fabrication de résines échangeuses d'anions du type poly(méth)acrylamide par aminolyse de polymères en perles d'esters poly(méth)acryliques avec une polyamine en excès, ensuite séparation de la résine échangeuse d'anions de la phase liquide contenant la polyamine n'ayant pas réagi, lavage à l'eau des échangeurs d'anions jusqu'à élimination de l'amine et récupération des polyamines des eaux de lavage, caractérisé en ce que l'on mélange directement la phase liquide contenant la polyamine n'ayant pas réagi et les eaux de lavage contenant la polyamine avec le polymère en perles d'ester poly(méth)acrylique réticulé à aminolyser, on ajoute au mélange la quantité nécessaire de polyamine fraîche pour le réglage de l'excès désiré de polyamine, on déshydrate par distillation le mélange ainsi obtenu jusqu'à ce que sa teneur en eau soit abaissée à une teneur < 7 %, de préférence à une valeur de 6-3 % en poids, et l'on aminolyse de la manière habituelle le mélange restant après cette déshydratation par distillation.

2.  Procédé selon la revendication 1, caractérisé en ce que l'on effectue la déshydratation par distillation de l'eau dans une colonne à fractionner.

3.  Procédé selon la revendication 1 ou 2, caractérisé en ce que l'élimination de l'amine par lavage est effectuée à contre-courant avec réutilisation des fractions d'eaux de lavage plus pauvres en polyamine formées dans la charge précédente et on réunit seulement les fractions d'eaux de lavage plus riches en polyamine avec la phase liquide contenant la polyamine et on les mélange avec le polymère en perles à aminolyser.